# EUROPEAN PATENT APPLICATION

(11) **EP 3 096 590 A2**
(43) Date of publication of application: **23.11.2016**
(21) Application number: 16169560.6
(22) Date of filing: 13.05.2016
(51) Int. Cl.: H05B 33/08

(54) **ILLUMINATING LAMP, ILLUMINATING APPARATUS, AND LIGHTING CONTROL CIRCUIT**

(30) Priority: 15.05.2015 JP 2015099995
(71) Applicant: Ricoh Company, Ltd., Tokyo 143-8555 (JP)
(72) Inventor: SHIRAI, Taroh, Tokyo 143-8555 (JP); NISHI, Ryohsuke, Tokyo 143-8555 (JP); KURIKI, Shoji, Tokyo 143-8555 (JP); UKEGAWA, Takeshi, Tokyo 143-8555 (JP)
(74) Representative: Schwabe - Sandmair - Marx

(57) **Abstract**

An illuminating lamp (100) connectable to commercial electric power (E) or a fluorescent lamp ballast (203) includes a semiconductor light emitting element (160), multiple lighting circuits (110, 120, 130) each capable of turning on the semiconductor light emitting element (160), a switching circuit (140) that switches connection between at least one of the multiple lighting circuits (110, 120, 130) and the semiconductor light emitting element (160), and a controller (150) that switches the switching circuit (140) in accordance with a predetermined condition, selects one lighting circuit (110, 120, 130) among the multiple lighting circuits (110, 120, 130), and turns on the semiconductor light emitting element (160) using the selected lighting circuit (110, 120, 130).

## Description

### BACKGROUND

### Technical Field

The present invention relates to an illuminating lamp, an illuminating apparatus, and a lighting control circuit.

### Background Art

Conventionally, illuminating lamps that can be directly connected to a fluorescent inverter ballast (i.e., in a broad sense, a lamp fitting) to turn on the light are known. One example of those illuminating lamps is an illuminating lamp using a semiconductor light emitting element such as a Light Emitting Diode (LED) illuminating lamp etc.

Since luminous efficiency of the LED illuminating lamp is higher than that of a fluorescent lamp, the LED illuminating lamp can create brightness with less power consumption than the power consumption required by the fluorescent lamp. In case of lighting the LED illuminating lamp directly connected to the lamp fitting, since the lamp fitting supplies electrical power similar to a case that the fluorescent lamp is connected to the LED illuminating lamp, the LED illuminating lamp consumes electrical power more than it is required.

To cope with this issue, in case of such LED illuminating lamp (i.e., LED illuminating lamp with no electrical work), technologies that the LED illuminating lamp consumes reactive power by connecting an inductance to the LED load to save energy are known (e.g., JP-2011-243311-A).

In the known technologies, the inductance is used for generating reactive power. Therefore, if an improper operation such as power shutdown etc. occurs while energy is stored in the inductance, back electromotive force (high voltage) is generated, and it is possible to break the lamp fitting that the illuminating lamp is connected.

In addition, in the known technologies, a value of the reactive power is uniquely determined by an inductance value. Therefore, in order to implement brightness similar to the fluorescent lamp or desired brightness, it is needed to lay out multiple rows of inductances with different inductance values and achieve the desired brightness by switching the inductance value using a switch.

Furthermore, the LED illuminating lamp can be connected to a glow ballast and a rapid ballast other than the inverter ballast, and the LED illuminating lamp can be directly connected to commercial AC power without the ballast (the fluorescent lamp ballast). Therefore, it is preferable to control lighting appropriately in accordance with presence or absence of the ballast or a type of the ballast.

### SUMMARY

Example embodiments of the present invention provide a novel illuminating lamp connectable to commercial electric power or a fluorescent lamp ballast that includes a semiconductor light emitting element, multiple lighting circuits each capable of turning on the semiconductor light emitting element, a switching circuit that switches connection between at least one of the multiple lighting circuits and the semiconductor light emitting element, and a controller that switches the switching circuit in accordance with a predetermined condition, selects one lighting circuit among the multiple lighting circuits, and turns on the semiconductor light emitting element using the selected lighting circuit.

Further embodiments of the present invention provide an illuminating apparatus and a lighting control circuit.

In the embodiments described below, an illuminating lamp that can save energy and control lighting appropriately in accordance with the ballast is provided.

### BRIEF DESCRIPTION OF THE DRAWINGS

A more complete appreciation of the disclosure and many of the attendant advantages and features thereof can be readily obtained and understood from the following detailed description with reference to the accompanying drawings, wherein:
FIG. 1 is a perspective view illustrating an illuminating apparatus as an embodiment of the present invention.
FIG. 2 is a cross-section diagram illustrating a lamp fitting, when cut in the longitudinal direction as an embodiment of the present invention.
FIG. 3 is an exploded perspective view illustrating an end portion of the illuminating lamp, when viewed from left in the longitudinal direction as an embodiment of the present invention.
FIG. 4 is an exploded perspective view illustrating around an end of the illuminating lamp, when viewed from right in the longitudinal direction as an embodiment of the present invention.
FIG. 5 is an exploded perspective view illustrating around an end of the illuminating lamp, when viewed from left in the longitudinal direction as an embodiment of the present invention.
FIG. 6 is an exploded perspective view illustrating around an end of the illuminating lamp, when viewed from right in the longitudinal direction as an embodiment of the present invention.
FIG. 7 is a cross-section diagram illustrating the illuminating lamp in the horizontal direction as an embodiment of the present invention.
FIG. 8 is a block diagram illustrating a configuration of an illuminating circuit as an embodiment of the present invention.
FIG. 9 is a circuit diagram illustrating the illuminating apparatus including the illuminating circuit selecting a first lighting method as an embodiment of the present invention.
FIG. 10 is a block diagram illustrating a configuration of a controller as an embodiment of the present invention.
FIG. 11 is a timing chart illustrating a relationship between a current value and a phase as an embodiment of the present invention.
FIG. 12 is a flowchart illustrating a process of selecting a phase as an embodiment of the present invention.
FIGS. 13A, 13B, and 13C are charts illustrating examples of a signal waveform as an embodiment of the present invention.
FIG. 14 is a circuit diagram for explaining an effect of the illuminating circuit in FIG. 9.
FIG. 15 is a timing chart for explaining operation of a circuit using the known technology.
FIG. 16 is a timing chart for explaining an effect of the illuminating circuit according to an embodiment of the present invention, compared to the timing chart of FIG. 16.
FIG. 17 is a circuit diagram illustrating the illuminating apparatus including the illuminating circuit using a first lighting method as an embodiment of the present invention.
FIG. 18 is a circuit diagram illustrating the illuminating apparatus including the illuminating circuit using a second lighting method as an embodiment of the present invention.
FIG. 19 is a circuit diagram illustrating the illuminating apparatus including the illuminating circuit using the second lighting method as another embodiment of the present invention.
FIG. 20 is a circuit diagram illustrating a circuit of a frequency detector as an embodiment of the present invention.
FIG. 21 is a circuit diagram illustrating the illuminating apparatus including the illuminating circuit using a third lighting method as an embodiment of the present invention.
FIG. 22 is a circuit diagram illustrating a circuit of a semiconductor light emitting element switcher as an embodiment of the present invention.
FIGS. 23A, 23B, and 23C are flowcharts illustrating an operation of selecting a lighting method as an embodiment of the present invention.

The accompanying drawings are intended to depict example embodiments of the present invention and should not be interpreted to limit the scope thereof. The accompanying drawings are not to be considered as drawn to scale unless explicitly noted.

### DETAILED DESCRIPTION

The terminology used herein is for the purpose of describing particular embodiments only and is not intended to be limiting of the present invention. As used herein, the singular forms "a", "an" and "the" are intended to include the plural forms as well, unless the context clearly indicates otherwise. It will be further understood that the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

In describing preferred embodiments illustrated in the drawings, specific terminology is employed for the sake of clarity. However, the disclosure of this patent specification is not intended to be limited to the specific terminology so selected, and it is to be understood that each specific element includes all technical equivalents that have the same function, operate in a similar manner, and achieve a similar result.

A more complete appreciation of the disclosure and many of the attendant advantages thereof will be readily obtained as the same becomes better understood by reference to the following detailed description when considered in conjunction with the accompanying drawings.

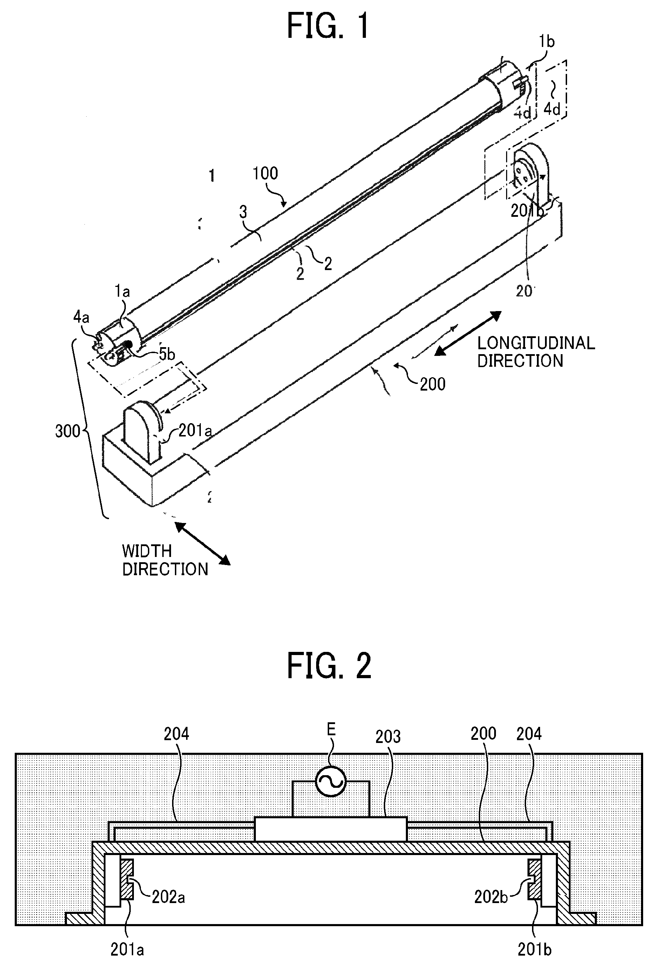

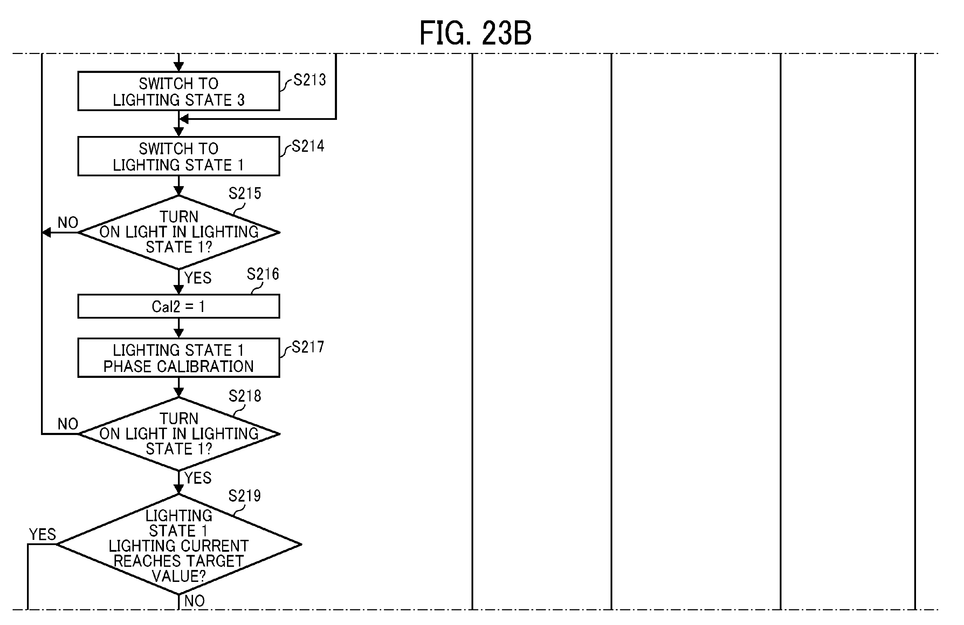

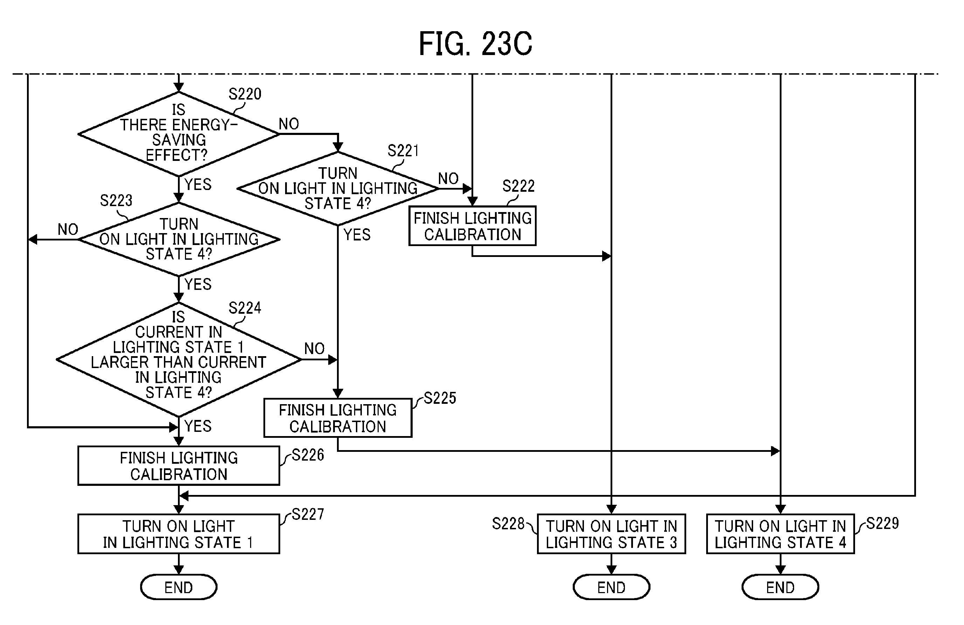

In the embodiments shown below, a configuration of the present invention is described in detail with reference to FIGS. 1 to 23A, 23B, and 23C.

### Illuminating apparatus

First, a configuration of the illuminating apparatus is described below with reference to FIGS. 1 to 7. FIG. 1 is a perspective view illustrating an illuminating apparatus in this embodiment. As shown in FIG. 1, an illuminating apparatus 300 includes an illuminating lamp 100 and a lamp fitting 200 that the illuminating lamp 100 is mounted.

The illuminating lamp 100 includes two cap members 1a and 1b, a case 2, and a transparent member 3. The case 2 has a long length, which is made by applying extrusion molding on metallic material made of such as aluminum alloy or magnesium alloy. The case 2 is formed to have a cross section that is substantially semicylindrical. The transparent member 3 is formed as a long-length semicylinder just like the case 2 so that, together with the case 2, forms a cylindrical shape. The transparent member 3 is at least partially formed of resin or glass so that a light flux emitted from multiple LEDs (described later) goes through the transparent member 3.

The cap members 1a and 1b each have a shape of cylinder with a bottom face and function as caps to cover the case 2 and the transparent member 3 at both ends. In addition, the cap members 1a and 1b connect the lamp fitting 200 and the illuminating lamp 100 physically and electrically by being attached to sockets 201a and 201b of the lamp fitting 200. In the embodiment described above, the case 2 is formed substantially in semicylinder. However, the form of the case 2 is not limited to the substantially semicylinder shape. In FIG. 1, the transparent member 3 is illustrated as having a semicircle shape. However, the transparent member 3 may have a cylindrical cross section and the transparent member 3 wraps the case 2.

FIG. 2 is a cross-section diagram illustrating a lamp fitting when cut in the longitudinal direction in this embodiment. As shown in FIG. 2, the lamp fitting 200 includes a fluorescent lamp ballast 203, and sockets 201a and 201b each of which mounts the illuminating lamp 100 detachably. The lamp fitting 200 can be connected to a commercial power E. For example, the frequency of the commercial power E is 50 Hz or 60 Hz etc. Electrical power from the commercial power E is supplied to the fluorescent lamp ballast 203. As shown in FIG. 2, the lamp fitting 200 has one side of the sockets 201a and 201b being embedded in a ceiling for example, and the other side of the sockets 201a and 201b being open-ended. The sockets 201a and 201b are connected to the fluorescent light ballast 203 via a pair of electrode terminals 202a and 202b and wirings 204.

Examples of the fluorescent lamp ballast 203 are a fluorescent lamp inverter ballast, a fluorescent lamp glow ballast, and a fluorescent lamp rapid ballast etc.

It should be noted that the illuminating lamp 100 can be directly connected to the commercial AC power supply. In that case, the fluorescent lamp ballast 203 is unnecessary. As described above, the illuminating lamp 100 can be connected to any one of the fluorescent lamp glow ballast, the fluorescent lamp rapid ballast, the fluorescent lamp inverter ballast, and the commercial AC power.

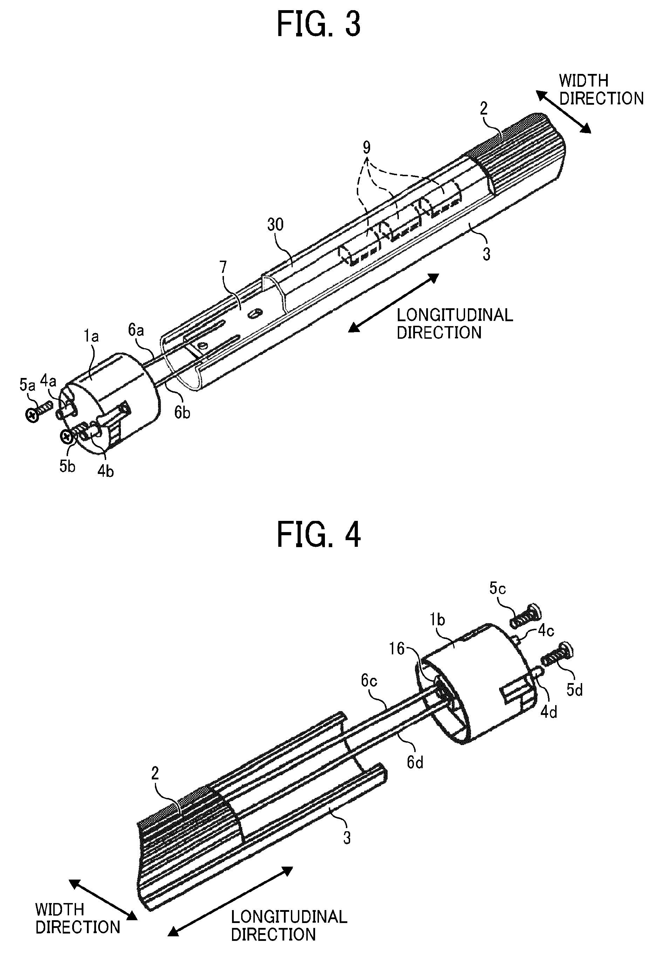

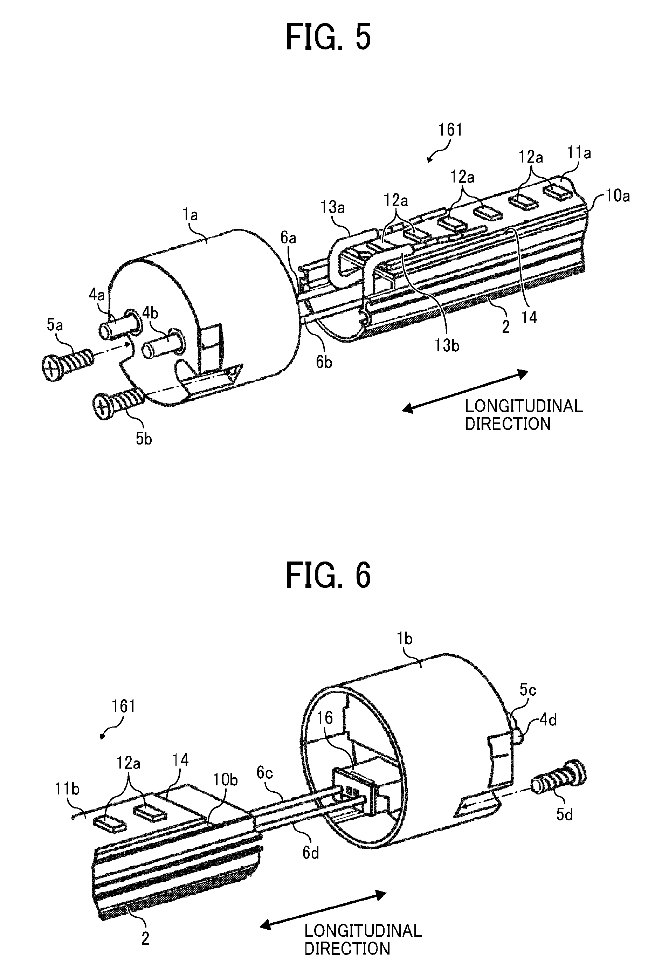

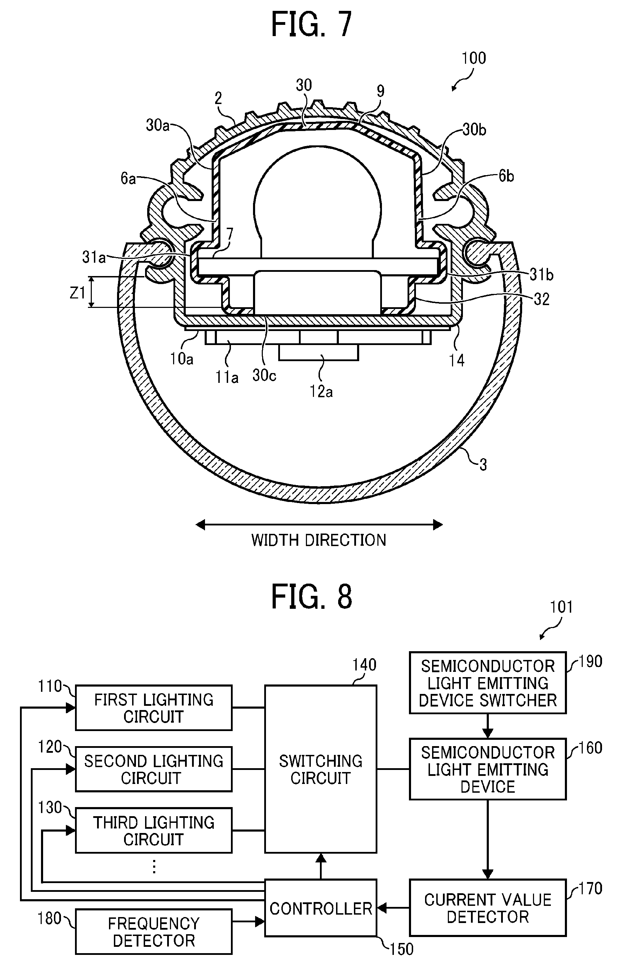

FIGS. 3 and 5 are exploded perspective views illustrating around an end of the illuminating lamp 100, when viewed from left in the longitudinal direction in this embodiment, and FIGS. 4 and 6 are exploded perspective views illustrating around an end of the illuminating lamp 100, when viewed from right in the longitudinal direction in this embodiment. FIG. 7 is a cross-section diagram illustrating the illuminating lamp 100 in the horizontal direction in this embodiment. It should be noted that a mounting board 11a laid out at an upper side of the power supply board 7 is omitted in FIG. 3 and the mounting board 11a is illustrated in FIG. 5. Similarly, a mounting board 11b is omitted in FIG. 4, and the mounting board 11b is illustrated in FIG. 6.

As shown in FIGS. 3 and 4, the cap members 1a and 1b are fixedly mounted on the case 2 with multiple screws 5a, 5b, 5c, and 5d. As a result, the cap members 1a and 1b wrap the transparent member 3, which the case 2 fits in, in an integrated fashion. That is, the cap members 1a and 1b are formed so that the cap members 1a and 1b cover each of both ends of the case 2 and the transparent member 3.

Instead of being screwed, the cap members 1a and 1b can be kept in absolute contact with a seam between the cap members 1a and 1b and the case (or being cramped) by using a tool etc. Otherwise, the cap members 1a and 1b can be formed using insert molding. Shapes of the cap members 1a and 1b are approximately similar to those of cap members (bases) located at both ends of existing fluorescent lamps. The illuminating lamp 100 can be easily exchanged with existing fluorescent lamps that have already been mounted on the lamp fitting 200.

As shown in FIGS. 3 to 6, electrode terminals 4a and 4b are laid out on the cap member 1a on one end, and electrode terminals 4c and 4d are laid out on the cap member 1b on the other end, so that the electrode terminals stick out from the cap member 1a or the cap member 1b in the longitudinal direction. In case of laying out the electrode terminals 4a, 4b, 4c, and 4d on the cap member 1a or 1b, it is possible to fix the electrode terminals 4a, 4b, 4c, and 4d to the cap members by using methods such as insert molding, cramping, and screwing etc. The illuminating lamp 100 loads the AC power from the commercial power E via the lamp fitting 200 and a connector 16 etc. laid out inside of the cap members 1a and 1b. The loaded AC power is supplied to the power supply board 7 in FIG. 3 via lead wires 6a, 6b, 6c, and 6d.

On the power supply board 7, electronic components 9 that convert the load AC power to DC power and supply the converted DC power to the mounting boards 11a and 11b. As shown in FIGS. 5 and 6, on the mounting boards 11a and 11b, a LED load 161 on which multiple LEDs 12a are laid out in the longitudinal direction is laid out. Here, the LED is an example of the semiconductor light emitting element. As shown in FIG. 3, the power supply board 7 is accommodated in the case 2 whose shape is approximate semicylinder and mounted in the case 2 so that the power supply board 7 does not move inside the case 2. In addition, in case of the illuminating apparatus 300 in this embodiment, the lead wires 6a and 6b are shorter than the lead wires 6c and 6d.

The current rectified to DC by the electronic components 9 is supplied to the mounting boards 11a and 11b via the lead wires 13a and 13b shown in FIG. 5. The mounting boards 11a and 11b are connected with each other via lead wires and jumper wires etc. electrically. Here, in this embodiment, two mounting boards 11a and 11b are illustrated as the mounting board that mounts the LED load 161. However, it is possible to lay out one mounting board or equal to or more than three mounting boards.

As shown in FIGS. 5 and 6, in the illuminating apparatus 300 in this embodiment, the power supply board 7 is laid out at a lower side of the mounting board 11a, and no component is laid out on the side of the mounting board 11b. In other words, the mounting board 11b is formed to be planar so that there is cavity in the case 2. In addition, the mounting boards 11a and 11b are mounted on a plane part 14 corresponding to a chord of a semicircle of the case 2. A sheet of resin member 10a is laid out between the plane part 14 and the mounting board 11a so that the resin member 10a is sandwiched between the plane part 14 and the mounting board 11a. Similarly, a sheet-formed resin member 10b is laid out between the plane part 14 and the mounting board 11b so that the resin member 10b is sandwiched between the plane part 14 and the mounting board 11b.

As illustrated in FIGS. 3 and 4, the power supply board 7 has the lead wires 6a and 6b and the lead wires 6c and 6d connected on both ends. As illustrated in FIG. 7, the power supply board 7 is surrounded by a holder 30 made of resin as a cover member extending in the longitudinal direction. Base members to be inserted into the connectors 16 are laid out at edges of the lead wires 6a, 6b, 6c, and 6d. The holder 30 has a long length equal to or longer than that of the power supply board 7, and the holder 30 is a sequential cylindrical component whose cross section does not have a cut section. The holder 30 can be formed by using methods such as extrusion molding, draw molding, and injection molding etc. Example materials of the holder 30 are polycarbonate (PC) and nylon (PA).

As shown in FIG. 7, the holder 30 can be accommodated in the case 2, and the cross section of the holder 30 is approximately the same throughout the longitudinal direction. The power supply board 7 and the holder 30 is made into a single unit by mounting the power supply board 7 on the holder 30 detachably.

That is, as shown in FIG. 7, on side surfaces 30a and 30b located in the width direction perpendicular to the longitudinal direction of the holder 30, socket members 31a and 31b projected in the width direction are formed. These socket members 31a and 31b function as guide rails in inserting the power supply board 7 into the holder 30 from the side of the edge. After inserting the power supply board 7, the socket members 31a and 31b support the power supply board 7 so that a dividing area (space) 32 is formed between the power supply board 7 and a bottom part 30c of the holder 30. The dividing area 32 is provided to keep a distance Z1, such that the lead wire of the electronic components 9 projected from the power supply board 7 does not contact the holder 30 to ensure electrical insulation.

By wrapping the power supply board 7 from outside, the holder 30 isolates the power supply board 7 from the case 2 inside of the case 2. As shown in FIG. 7, the holder 30 contacts the inner side surface of the case 2 inside of the case 2. To be moved in the case 2 smoothly, the surface of the holder 30 that contacts the inner side surface of the case 2 is formed as a smooth surface. In this case, the cross section of the holder 30 has no cut section to divide the holder 30. As a result, in case of mounting the power supply board 7 in the holder 30, the power supply board 7 is inserted into the holder 30 from the open end of the holder 30. A power supply board unit is formed, by integrating the holder 30 with the power supply board 7 before being inserted into the case 2. The power supply board unit is then inserted into the case 2 from the open end of the case 2.

In this configuration, since there is the holder 30 that wraps the power supply board 7, isolates the power supply board 7 from the case 2, and is made of resin whose cross section is approximately the same extending in the longitudinal direction that can be accommodated in the case 2, it is possible to keep electrical isolation from the case 2, ensuring high safety. In addition, since it is unnecessary to paint insulation on the inner surface of the case 2, the case 2 can be manufactured at low cost. Furthermore, the power supply board 7 can be separated from the case 2 by the holder 30, thus preventing the projecting lead wires 13a and 13b of the electronic components 9 from contacting the case 2. This further allows to manufacture the components without using expensive components such as chip components.

In addition, in case of the illuminating apparatus 300 in this embodiment, since the holder 30 (the bottom part 30c of the holder 30) is disposed between the power supply board 7 and the mounting boards 11a and 11b, it is possible to prevent heat of the power supply board 7 from being conducted into the mounting boards 11a and 11b, thus making uniform the effect of heat conducted to the LED load 161 for all LEDs. As a result, it is possible to prevent life of LEDs from being short partially as time passes.

In addition, since the contact surface of the holder 30 integrated with the power supply board 7 is smooth, it is possible to reduce friction resistance, moving the power supply board unit smoothly in the case 2. As a result, it is possible to insert the connector 16 into the base part on both ends easily.

In addition, there is no slit in the cross section of the holder 30, and the cross section is formed sequentially. Therefore, it is possible to prevent the electronic components 9 from contacting the case 2, keeping electrical isolation with the case 2 and ensuring high safety. In addition, it is unnecessary to paint insulation on the inner surface of the case 2, such that the case 2 can be manufactured at low cost.

### (Illuminating circuit)

The illuminating lamp 100 includes a semiconductor light emitting element 160, multiple lighting circuits (a first lighting circuit 110, a second lighting circuit 120, and a third lighting circuit 130) that light up the semiconductor light emitting element 160, a switching circuit 140 that switches a connection status between the multiple lighting circuits and the semiconductor light emitting element, and a controller 150 that switches the switching circuit in accordance with predetermined conditions, selects one lighting circuit among multiple lighting circuits, and lights up the semiconductor light emitting element using the selected lighting circuit.

Circuitry of an illuminating circuit 101 as the lighting control circuit included in the illuminating lamp 100 is described below. FIG. 8 is a block diagram illustrating a configuration of the illuminating circuit 101 in this embodiment. The illuminating circuit 101 includes the first lighting circuit 110, the second lighting circuit 120, the third lighting circuit 130, the switching circuit 140, the controller 150, the semiconductor light emitting element 160 (the LED load 161), a current value detector 170 (a current sense resistor 171), a frequency detector 180, and a semiconductor light emitting element switching circuit 190.

The illuminating circuit 101 includes multiple lighting circuits as driving circuits that light up the semiconductor light emitting element 160. In this embodiment, the illuminating circuit 101 includes three lighting circuits, the first lighting circuit 110, the second lighting circuit 120, and the third lighting circuit 130.

Three lighting circuits, i.e., the first lighting circuit 110, the second lighting circuit 120, and the third lighting circuit 130, are laid out in parallel connectable to the semiconductor light emitting element 160 respectively. By switching the switching circuit (switch) 140 under control of a signal from the controller 150, one lighting circuit among three lighting circuits 110 to 130 is connected to the semiconductor light emitting element 160, and the semiconductor light emitting element 160 is turned on by the selected lighting circuit.

The current value detector 170 detects a value of current that flows through the semiconductor light emitting element 160. Based on the detected value input from the current value detector 170 and input from the frequency detector 180 etc., the controller 150 selects the most appropriate lighting circuit for the connected fluorescent lamp ballast 203 and controls turning on and off each lighting circuit.

In addition, the semiconductor light emitting element switching circuit 190 switches a series connection and parallel connection of the semiconductor light emitting element 160. The above components are described below in detail.

### (First lighting circuit)

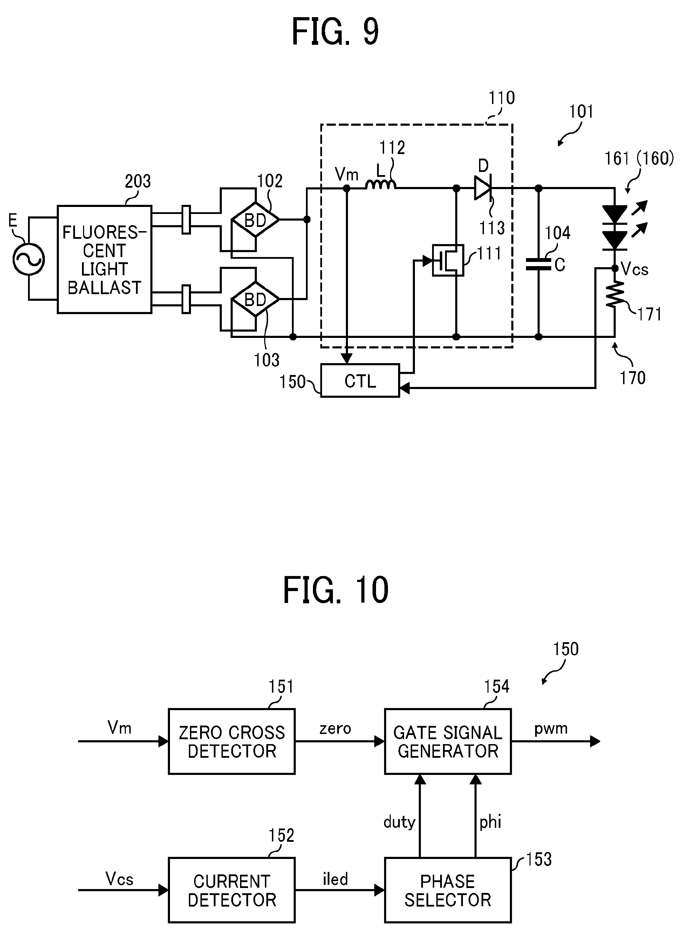

FIG. 9 is a circuit diagram illustrating the illuminating apparatus 300 including the illuminating circuit that the first lighting circuit 110 and the LED load 161 are connected using the switching circuit 140. FIG. 9 is a circuit diagram including the commercial power E, the fluorescent lamp ballast 203, mounting boards 11a and 11b of the illuminating lamp 100, and the illuminating circuit 101 laid out on the power supply board 7.

It is the most suitable to use the first lighting circuit 110 if the inverter ballast is connected as the fluorescent lamp ballast 203.

As shown in FIG. 9, the illuminating apparatus 300 includes the commercial power E, the fluorescent lamp ballast 203, bridge diodes (BDs) 102 and 103 that perform full-wave rectification on the AC power, the controller (CNT) 150, an inductance element (L) 112 connected to the bridge diodes 102 and 103, an active switch (i.e., an example of the switching element) 111 that is connected between the other side of the inductance 112 and a reference point of the bridge diodes 102 and 103 and is turned on and off by the controller 150, a diode (D) 113 that rectifies the signal switched by the active switch 111, a capacitor (C) 104 that smooths the signal rectified by the diode 113, the LED load 161, and the current sense resistor 171. In addition, a switching converter consists of the active switch 111, the inductance 112, and the diode 113.

In this case, the illuminating circuit 101 that includes the bridge diodes 102 and 103, the controller 150, the active switch 111, the inductance 112, the diode 113, the capacitor 104, the LED load 161, and the current sense resistor 171 is laid out on any one of the mounting boards 11a and 11b of the illuminating lamp 100 and the power supply board 7.

The first lighting circuit 110 includes the bridge diodes 102 and 103, the active switch 111, the inductance 112, the diode 113, and the capacitor 104. Here, the switching converter surrounded by broken lines in FIG. 9 constructs a substantial part of the first lighting circuit 110. The part of the first lighting circuit 110 surrounded by the broken lines is laid out in parallel with a substantial part of the second lighting circuit 120 and a substantial part of the third lighting circuit 130 (described later) while that is not illustrated in FIG. 9. In addition, the switching circuit 140 can switch the connection to the LED load 161.

In this embodiment, the bridge diodes 102 and 103 and the capacitor 104 are common elements in the lighting circuits. However, it is possible that the bridge diodes 102 and 103 and the capacitor 104 are included in each lighting circuit respectively.

The bridge diodes 102 and 103 perform full-wave rectification on the AC power supplied from the commercial power E via the fluorescent lamp ballast 203.

The controller 150 controls timing of turning on and off the active switch 111. More specifically, the controller 150 generates a gate signal of the active switch 111, outputs the generated gate signal to the active switch 111, and controls turning on and off the active switch 111 by driving the active switch 111.

Here, the controller 150 controls turning on the active switch 111 at timing different from zero crossing timing of the AC power (AC voltage Vm in FIG. 9) performed full-wave rectification by the bridge diodes 102 and 103 (i.e., timing when the AC voltage performed full-wave rectification becomes equal to the reference voltage of the bridge diode). It should be noted that a waveform of the AC voltage Vm is described later. In addition, the controller 150 is described later in detail.

The switching converter is a converter that converts the AC voltage performed full-wave rectification by the bridge diodes 102 and 103 (AC voltage Vm in FIG. 9) into the DC power (i.e., an AC-DC converter). In this embodiment, the switching converter is a boosting converter. That is, the inductance 112 and the diode 113 are connected in series with the LED load 161, and the active switch 111 is connected in parallel with the LED load 161.

The capacitor 104 is a smoothing capacitor connected in parallel with the LED load 161 and eliminates AC component included in the DC current output by the switching converter.

The LED load 161 is connected to the switching converter, and the DC signal converted by the switching converter is output to the LED load. More specifically, the switching converter supplies the DC voltage to the LED load 161, and the LED load 161 emits light when the DC current flows through.

The current sense resistor 171 is a resistor that detects a value of current that flows through the LED load 161 and outputs a terminal voltage Vcs to the controller 150.

FIG. 10 is a block diagram illustrating a configuration of a controller in this embodiment. As shown in FIG. 10, the controller 150 includes a zero crossing detector 151, a current detector 152, a phase selector 153, and a gate signal generator 154.

The zero crossing detector 151 detects the zero crossing timing of the AC power (AC voltage Vm in FIG. 9) performed full-wave rectification by the bridge diodes 102 and 103. The zero crossing detector 151 outputs a zero signal that becomes High at the zero crossing timing and becomes Low at timing other than the zero crossing timing to the gate signal generator 154. It should be noted that a waveform of the zero signal is described later. An example of the zero crossing detector 151 is a comparator.

The current detector 152 detects a value of current iled that flows through the LED load 161. More specifically, the current detector 152 performs analog-digital (AD) conversion on the terminal voltage Vcs output by the current sense resistor 171, detects the value of current iled that flows through the LED load 161 based on the AD-converted voltage and a resistance value of the current sense resistor 171, and outputs the value of current iled to the phase selector 153. Here, it is assumed that the resistance value of the current sense resistor 171 is known in the current detector 152. Examples of the current detector 152 are the AD converter and a dividing circuit.

The phase selector 153 selects a phase phi from the zero crossing timing when the current that flows through the LED load 161 reaches target current based on the current value iled detected by the current detector 152. The phase selector 153 outputs the selected phase phi to the gate signal generator 154. It should be noted that the selection of the phase phi is described later in detail.

In addition, the phase selector 153 outputs a duty signal that indicates a duty ratio of the gate signal for the active switch 111 (an example of a predetermined duty ratio) to the gate signal generator 154.

In this case, the duty ratio of the gate signal for the active switch 111 is configured so that the output voltage of the switching converter reaches target voltage. However, it is assumed that the illuminating lamp 100 in this embodiment is connected (mounted) to various kinds of fluorescent lamp ballast 203. Values of the AC voltage output by the fluorescent lamp ballast 203 are not the same for all fluorescent lamp ballast 203, and Values of the AC voltage output by the fluorescent lamp ballast 203 vary depending on the type of the fluorescent lamp ballast 203. As a result, regardless of the type of the fluorescent lamp ballast 203, it is impossible to configure the duty ratio so that the output voltage of the switching converter reaches the target voltage.

Therefore, in this embodiment, the control that the output voltage of the switching converter reaches the target value is not performed, and the duty ratio is configured to a fixed value. For example, the duty ratio can be set to 50%. This is because that control is preferable to ensure that enough reactive power is generated by the switching converter. However, the duty ratio is not limited to 50%, and the duty ratio can be set to other values.

The gate signal generator 154 generates the gate signal based on the zero crossing timing detected by the zero crossing detector 151, the phase selected by the phase selector 153, and the duty ratio from the phase selector 153 and controls turning on and off the active switch 111 based on the generated gate signal.

In this embodiment, the gate signal is changed from Low into High considering the timing deviated a specified phase from the zero crossing timing as a base point. That is, the gate signal is a pulse width modulation (PWM) signal that changes from High into Low and vice versa based on the duty ratio. It should be noted that the gate signal generator 154 calculates the period of the PWM signal based on the zero signal and configures the frequency of the PWM signal. As a result, PWM signal can be synchronized with the zero signal. It should be noted that a waveform of the PWM signal is described later.

Here, the selection of the phase phi is described below in detail. First, the phase selector 153 sets various phases to the gate signal generator 154 sequentially, and the gate signal generator 154 generates gate signals with different phases and outputs those gate signals to the active switch 111. Next, the current detector 152 detects the value of the current that flows through the LED load 161 for each of the generated gate signals, and the phase selector 153 selects the phase of the gate signal whose current value is the closest to the target current among multiple detected current values.

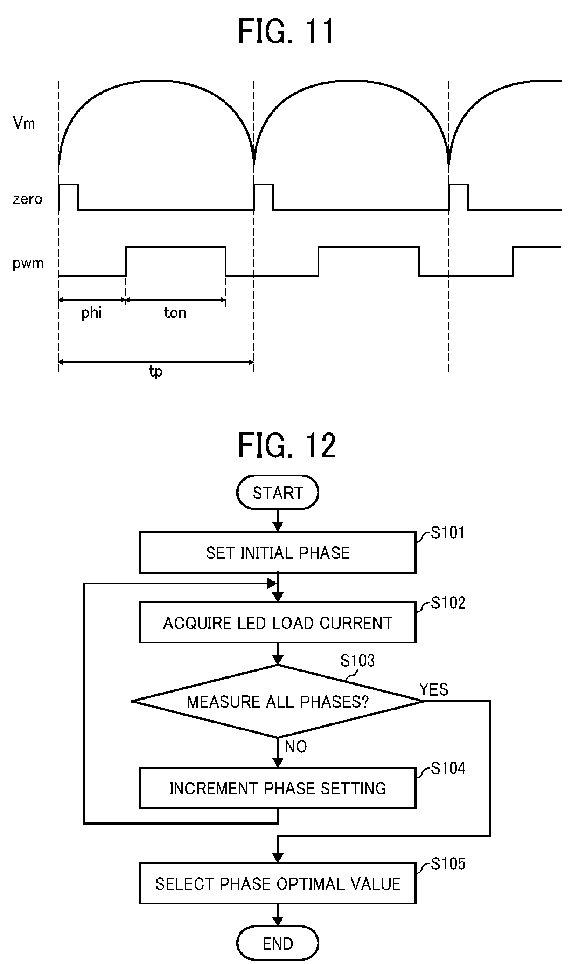

FIG. 11 is a timing chart illustrating waveforms of the AC voltage Vm, the zero signal, and the PWM signal. Here, ton of the PWM signal indicates the period when the PWM signal is turned on, i.e., the PWM signal becomes High, and tp indicates one period of the PWM signal. In this case, Ton is a signal delayed for the phase phi compared to the zero signal.

FIG. 12 is a flowchart illustrating a process of selecting a phase (a phase calibration) in this embodiment.

First, the phase selector 153 sets an initial phase in S101, and the gate signal generator 154 generates the gate signal with the initial phase and outputs the generated gate signal to the active switch 111.

Next, the current detector 152 detects the value of current that flows through the LED load 161 in accordance with that the gate signal is output to the active switch 111 in S102.

If it is not finished to measure for all phases (NO in S103), the phase selector 153 increments the phase setting in S104, and the gate signal generator 154 generates the gate signal with the incremented phase and outputs the generated gate signal to the active switch 111. Subsequently, the process returns to S102.

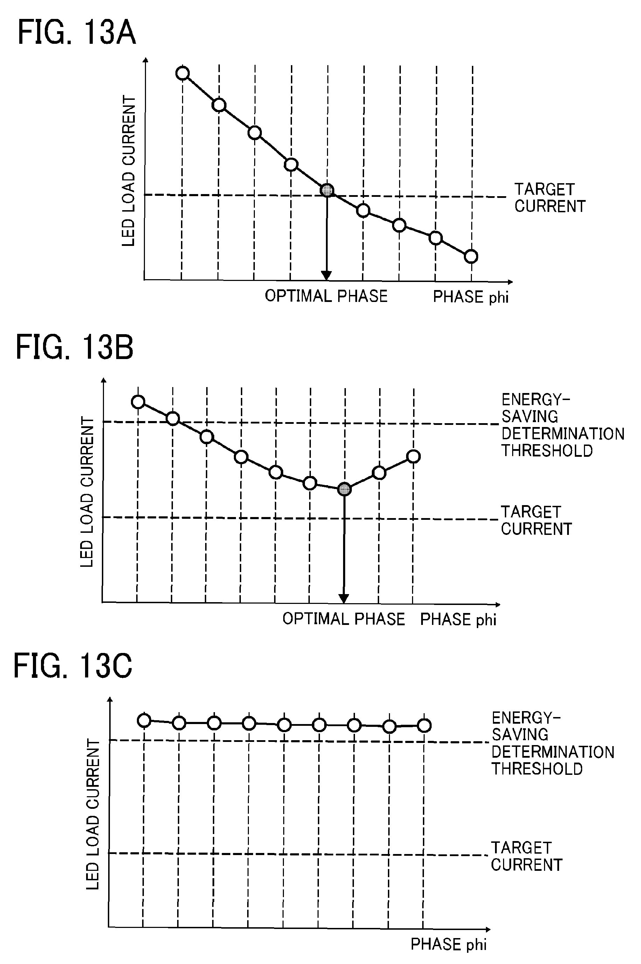

If it is finished to measure for all phases (YES in S103), the relationship between the current value that flows through the LED load 161 and the phase as shown in FIGS. 13A, 13B, and 13C is acquired, and it is possible to select a phase optimum value whose current value is the closes to the target current in S105.

FIG. 13A is a chart illustrating a case that the current that flows through the LED load reaches the target value, FIG. 13B is a chart illustrating a case that the current does not reaches the target value but energy-saving effect is acquired, and FIG. 13C is a chart illustrating a case that energy-saving effect is not acquired. As shown in FIGS. 13A, 13B, and 13C, by setting the target current and a threshold value for determining whether or not the energy-saving effect is acquired, it is possible to determine whether or not the current reaches the target value and whether or not the energy-saving effect is acquired.

Here, examples of a method of controlling the output waveform by the fluorescent lamp ballast 203 are constant current control method, constant apparent power control method, and constant active power control method etc. In the constant active power control method, excess current larger than the ballast expects is output after generating the reactive power. As a result, it is possible to crash or destroy the fluorescent lamp ballast 203.

As a result, if the multiple current values detected by the current detector 152 are the same, the phase selector 153 selects zero as the phase. If the current value that flows through the LED load 161 does not change in accordance with the phase change, the fluorescent lamp ballast 203 adopts the constant active power control method and the saving-energy effect is not acquired in accordance with the phase change. As a result, it is possible to crash or destroy the fluorescent lamp ballast 203.

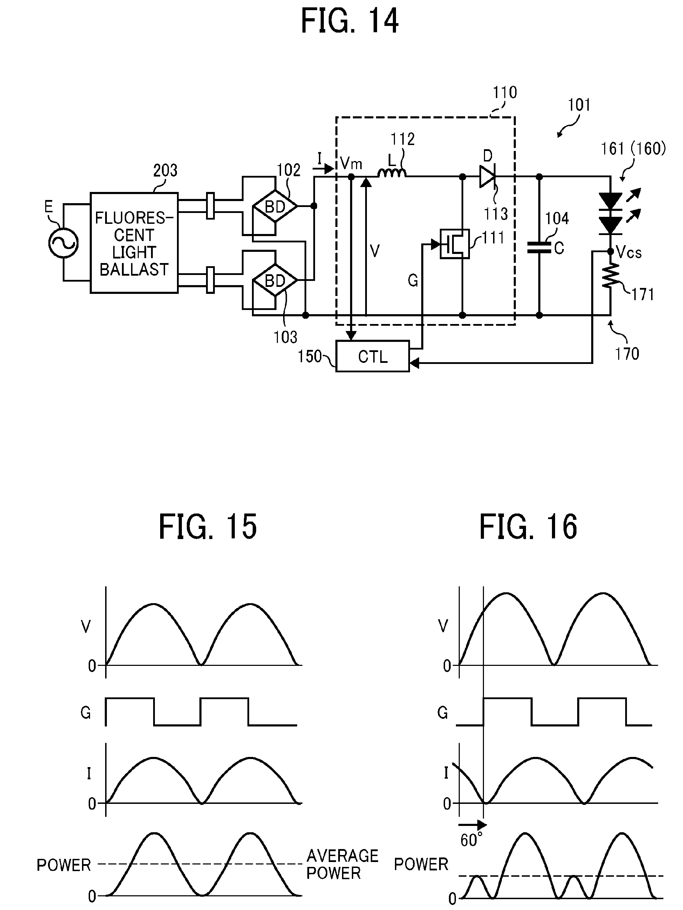

Effects of turning on the light using the first lighting circuit 110 are described below with reference to FIGS. 14 to 16. FIG. 15 is a chart illustrating an input voltage V, a gate signal G, an input current I, and power of the switching converter in the known technology that does not perform the phase control described above. FIG. 16 is a chart illustrating an input voltage V, a gate signal G, an input current I, and power of the switching converter in this embodiment that performs the phase control described above. In FIG. 16, the phase delays for 60° from the timing of zero crossing. In FIG. 14, points corresponding to an input voltage V, a gate signal G, and an input current I are illustrated.

As shown in FIGS. 15 and 16, the reactive power is generated by performing the phase control in FIG. 16, and the average power in FIG. 16 is smaller than the average power in FIG. 15. As a result, the power consumption output from the switching converter and consumed by the LED load 161 in FIG. 16 is smaller than that in FIG. 15, acquiring the saving-energy effect.

As described above, by using the first lighting circuit 110, it is possible to turn on the light using the switching converter with the boosting circuit configuration in the constant apparent power control ballast. In this embodiment, the switching converter is a boosting type. However, it is possible that the switching converter is a step-down type.

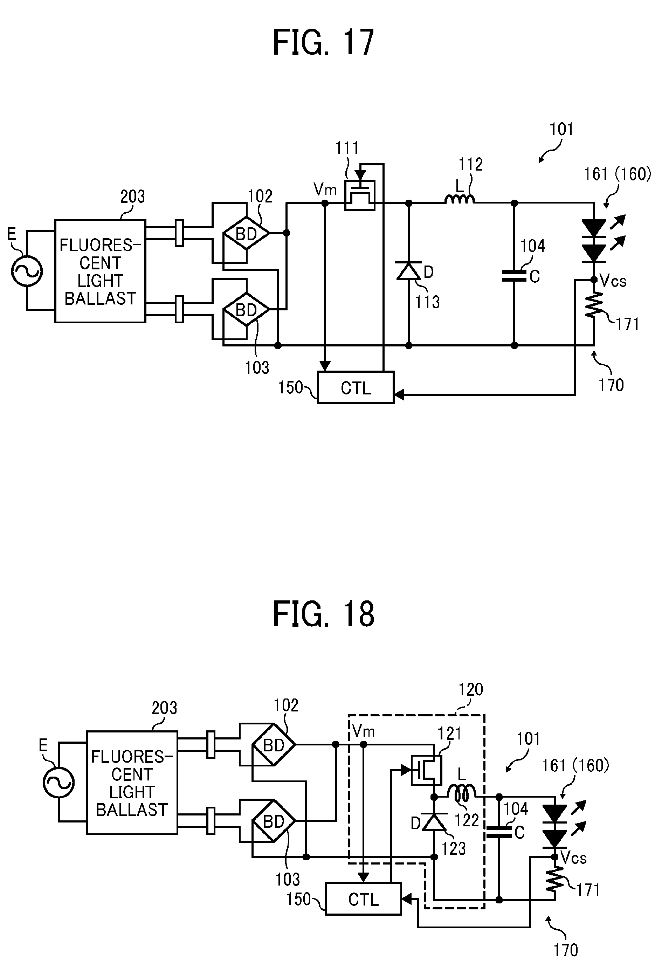

FIG. 17 is another circuit diagram including the commercial power E, the fluorescent lamp ballast 203, mounting boards 11a and 11b of the illuminating lamp 100, and the illuminating circuit 101 laid out on the power supply board 7. In the illuminating apparatus in FIG. 17, the switching converter is a step-down converter. That is, the active switch 111 and the inductance 112 are connected in series with the LED load 161, and the diode 113 is connected in parallel with the LED load 161.

By using the first lighting circuit 110, since reactive power is generated using the active switch instead of the inductance, it is possible to prevent back electromotive force from being generated, acquiring the saving-energy effect and enhancing safety.

In addition, by using the first lighting circuit 110, it is possible to generate reactive power intentionally in the fluorescent lamp ballast 203 that controls constant reactive power and adjust current that flows through the semiconductor light emitting element using phase delay amount to change brightness.

However, there is a fluorescent lamp ballast 203 that controls constant active power consumed by the illuminating device or a fluorescent lamp ballast 203 that turns off the light in case of not operating in impedance the same as the fluorescent lamp. Therefore, it is required to appropriately perform control depending on the type of the ballast.

### (Second lighting circuit)

FIG. 18 is a circuit diagram illustrating the illuminating apparatus 300 including the illuminating circuit 101 that the second lighting circuit 120 and the LED load 161 are connected using the switching circuit 140. FIG. 18 is a circuit diagram including the commercial power E, the fluorescent lamp ballast 203, mounting boards 11a and 11b of the illuminating lamp 100, and the illuminating circuit 101 laid out on the power supply board 7. Descriptions that have already been described before are omitted arbitrarily.

It is the most suitable to use the second lighting circuit 120 if the rapid ballast or the glow ballast is connected as the fluorescent lamp ballast 203. It is also the most suitable to use the second lighting circuit 120 if the illuminating lamp 100 is directly connected to the commercial power E without the fluorescent lamp ballast 203.

As shown in FIG. 18, the illuminating apparatus 300 includes the commercial power E, the fluorescent lamp ballast 203, bridge diodes 102 and 103 that perform full-wave rectification on the AC power, the controller 150, an active switch 121 is connected to the bridge diodes 102 and 103 and turned on and off by the controller 150, an inductance element 122 connected to the active switch 121 and a diode 123, the diode 123 connected between the active switch 121 and a reference point voltage of the bridge diodes 102 and 103, a capacitor 104 that is connected between the other side of the inductance 122 and the reference point of the bridge diodes 102 and 103, the LED load 161, and the current sense resistor 171. In addition, a PFC converter (a switching converter) consists of the active switch 121, the inductance 122, and the diode 123.

The second lighting circuit 120 consists of the bridge diodes 102 and 103, the active switch 121, the inductance 122, the diode 123, and the capacitor 104. Here, the PFC converter surrounded by broken lines in FIG. 18 constructs a substantial part of the second lighting circuit 120. The part of the second lighting circuit 120 surrounded by the broken lines is laid out in parallel with a substantial part of the first lighting circuit 110 and a substantial part of the third lighting circuit 130 while that is not illustrated in FIG. 18. In addition, the switching circuit 140 can switch the connection to the LED load 161.

The bridge diodes 102 and 103 perform full-wave rectification on the AC power supplied from the commercial power E via the rapid ballast or the glow ballast.

The controller 150 controls timing of turning on and off the active switch 121. More specifically, the controller 150 generates the gate signal for the active switch 121, outputs the generated gate signal to the active switch 121 to drive the active switch 121.

Here, the PFC converter is a converter that converts the AC voltage performed full-wave rectification by the bridge diodes 102 and 103 into the DC power and improves power factor of voltage and current output by the fluorescent lamp ballast 203. In this embodiment, the PFC converter is a step-down converter. That is, the active switch 121 and the inductance 122 are connected in series with the LED load 161, and the diode 123 is connected in parallel with the LED load 161.

The capacitor 104 is a smoothing capacitor connected in parallel with the LED load 161 and eliminates AC component included in the DC current output by the PFC converter.

The LED load 161 is connected to the PFC converter, and the DC signal converted by the PFC converter is output to the LED load. More specifically, the PFC converter supplies the DC voltage to the LED load 161, and the LED load 161 emits light when the DC current flows through.

The current sense resistor 171 is a resistor that detects a value of current that flows through the LED load 161 and outputs a terminal voltage Vcs to the controller 150.

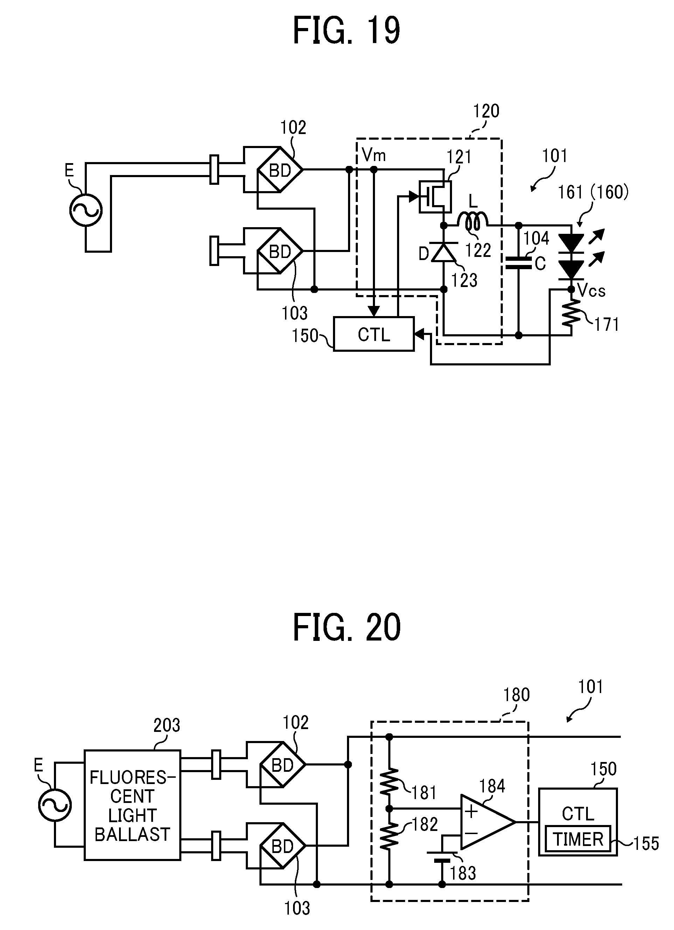

As shown in FIG. 19, in the second lighting circuit 120, it should be noted that it is possible to turn on the LED load 161 using the PFC converter if the commercial power E is directly connected to the illuminating circuit 101 without the fluorescent lamp ballast 203 such as the rapid ballast or the glow ballast etc.

As described above, by using the second lighting circuit 120, it is possible to turn on the LED load 161 with constant current operation maintaining high power factor if the fluorescent lamp ballast 203 such as the glow ballast or the rapid ballast etc. is connected or even if the commercial power E is directly connected.

### (Frequency detector)

Next, the frequency detector 180 (frequency detecting circuit) is described below. The frequency detector 180 is a circuit for determining the type of the fluorescent lamp ballast 203 connected to the illuminating lamp 100 and determining whether or not the fluorescent lamp ballast 203 is connected.

FIG. 20 is a circuit diagram illustrating the frequency detector 180 that determines the type of the fluorescent lamp ballast 203 connected to the illuminating circuit 101 and whether or not the fluorescent lamp ballast 203 is connected.

The frequency detector 180 consists of dividing resistors 181 and 182 that divides the output by the bridge diodes 102 and 103 and a comparator 184 that compares the voltage divided by the dividing resistors 181 and 182 with a constant voltage (a power source 183), and the output of the comparator 184 is input into the controller 150.

The controller includes a timer 155 and detects frequency by measuring inverting interval time of the comparator 184 using the timer 155.

In FIG. 20, the frequency detector 180 is connected to the commercial power E via the fluorescent lamp ballast 203. However, it is possible to detect frequency even if the commercial power E is directly connected (as shown in FIG. 19).

In addition, the configuration of the frequency detector 180 described above is just an example. In FIG. 20, frequency is detected using the comparator 184. Otherwise, for example, it is possible to input a voltage divided by the dividing resistors 181 and 182 into the controller 150 via a Schmitt trigger.

By using the frequency detector 180 described above, the controller 150 can measure the frequency of the voltage input into the illuminating circuit 101 based on the input from the frequency detector 180. More specifically, if either the glow ballast or the rapid ballast as the fluorescent lamp ballast 203 is connected to the illuminating circuit 101 and if the commercial power E is directly connected to the illuminating circuit 101, the input voltage frequency is detected as the commercial frequency. By contrast, if the inverter ballast as the fluorescent lamp ballast 203 is connected to the illuminating circuit 101, the input frequency input into the illuminating circuit 101 is generally equal to or more than 1000 times of the commercial frequency. As a result, it is possible to distinguish the case that the inverter ballast is connected from the case that either one of the glow ballast, the rapid ballast, and the commercial power E is connected.

### (Third lighting circuit)

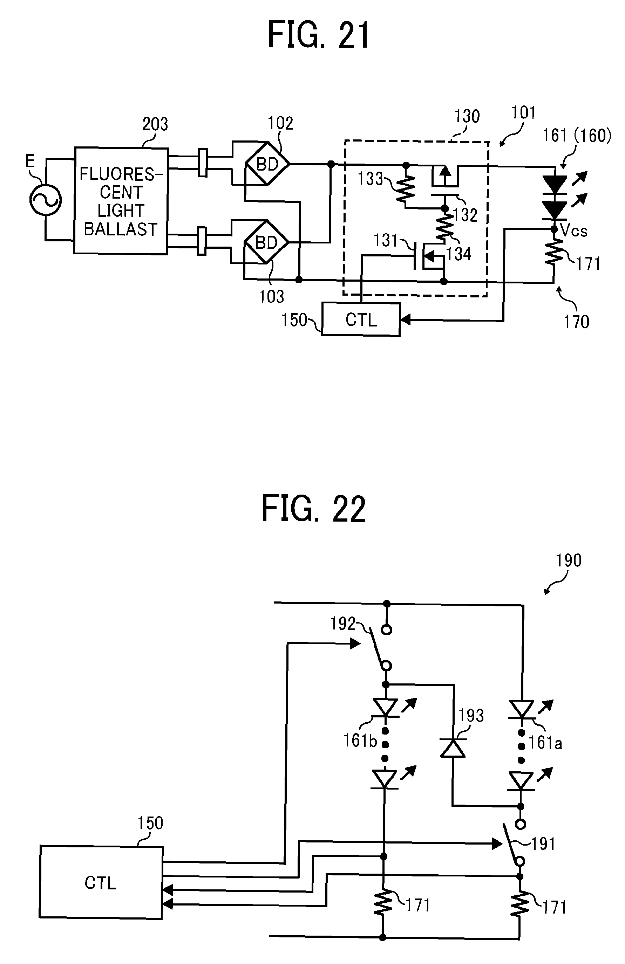

FIG. 21 is a circuit diagram illustrating the illuminating apparatus 300 including the illuminating circuit 101 that the third lighting circuit 130 and the LED load 161 are connected using the switching circuit 140. FIG. 21 is a circuit diagram including the commercial power E, the fluorescent lamp ballast 203, mounting boards 11a and 11b of the illuminating lamp 100, and the illuminating circuit 101 laid out on the power supply board 7. Descriptions that have already been described before are omitted arbitrarily.

It is the most suitable to use the third lighting circuit 130 if a constant active power control ballast etc. is connected as the fluorescent lamp ballast 203.

As shown in FIG. 21, the illuminating apparatus 300 includes the commercial power E, the fluorescent lamp ballast 203, bridge diodes 102 and 103 that perform full-wave rectification on the AC power, the controller 150, the LED load 161, the current sense resistor 171, a Pch switching element 132 that connects the bridge diodes 102 and 103 with the LED load 161 and the current sense resistor 171, a Nch switching element 131 that controls turning on and off the Pch switching element 132, a resistor element 133 that determines a gate-source voltage of the Pch switching element 132, and a resistor element 134. In addition, the controller 150 controls turning on and off the Nch switching element 131.

The third lighting circuit 130 consists of the bridge diodes 102 and 103, the Pch switching element 132, the Nch switching element 131, the resistor element 133, and the resistor element 134. Here, the part surrounded by broken lines in FIG. 21 constructs a substantial part of the third lighting circuit 130. The part of the third lighting circuit 130 surrounded by the broken lines is laid out in parallel with a substantial part of the first lighting circuit 110 and a substantial part of the second lighting circuit 120 while that is not illustrated in FIG. 21. In addition, the switching circuit 140 can switch the connection to the LED load 161.

In the third lighting circuit 130, a turn-up voltage that the bridge diodes 102 and 103 perform full-wave rectification on the output voltage of the fluorescent lamp ballast 203 is directly applied to the LED load 161. That is, it is possible to connect the output of the bridge diodes 102 and 103 with the LED load 161 without the switching converter and turn on the LED load 161. In this case, load impedance from the viewpoint of the fluorescent lamp ballast 203 is the same as the impedance of the LED load 161. By contrast, just like other lighting circuits, if the switching converter or the PFC converter is inserted, the load impedance is converted in accordance with a boosting ratio or a step-down ratio.

(Semiconductor light emitting element switcher) In case of using the third lighting circuit 130, it is preferable to further include a semiconductor light emitting element switching circuit 190.

FIG. 22 is a circuit diagram illustrating the semiconductor light emitting element switching circuit 190 in this embodiment. The semiconductor light emitting element switching circuit 190 includes a first switching element 191, a second switching element 192, and a diode 193.

The controller 150 switches connecting states with a first LED load 161a and a second LED load 161b by controlling the first switching element 191 and the second switching element 192.

That is, if the controller 150 turns off the first switching element 191 and the second switching element 192, the first LED load 161a is connected in series with the second LED load 161b via the diode 193.

In this case, by setting a characteristic so that impedance of the fluorescent lamp in turning on the light becomes the same as a series synthetic impedance of the first LED load 161a and the second LED load 161 in turning on the light serially, in case of turning on the light using the third lighting circuit 130 in FIG. 21, it is possible to ensure a state of lighting for all ballasts instead of an operation of detecting protection.

By contrast, if the controller 150 turns on the first switching element 191 and the second switching element 192, the first LED load 161a is connected in parallel with the second LED load 161b.

In this case, in case of turning on the light using the third lighting circuit 130 in FIG. 21, the synthetic impedance becomes lower than in the case of series connection, and it is possible to save energy using the ballast that reduces the output power as the load resistance decreases.

As described above, by using the third lighting circuit 130 that includes the semiconductor light emitting element switching circuit 190, it is possible to switch the LED load 161 from series connection to parallel connection and vice versa. As a result, in case of using the fluorescent lamp ballast 203 with the constant active power control method that cannot save energy in shifting the phase and it is possible to crash or destroy the fluorescent lamp ballast 203, it is possible to save energy by decreasing the impedance by changing the number of lamps of the LED load 161 instead of shifting the phase. Furthermore, it is possible to ensure the lighting status by implementing the number of lamps that can turn on the light using the impedance the same as the case that turns on the fluorescent lamp.

As shown in FIG. 8, in case of including the first lighting circuit 110, the second lighting circuit 120, and the third lighting circuit 130, if the first lighting circuit 110 and the second lighting circuit 120 turn on the LED load 161, it is just required to turn on the first switching element 191 and the second switching element 192 of the semiconductor light emitting element switching circuit 190

### (Operation of selecting lighting circuit)

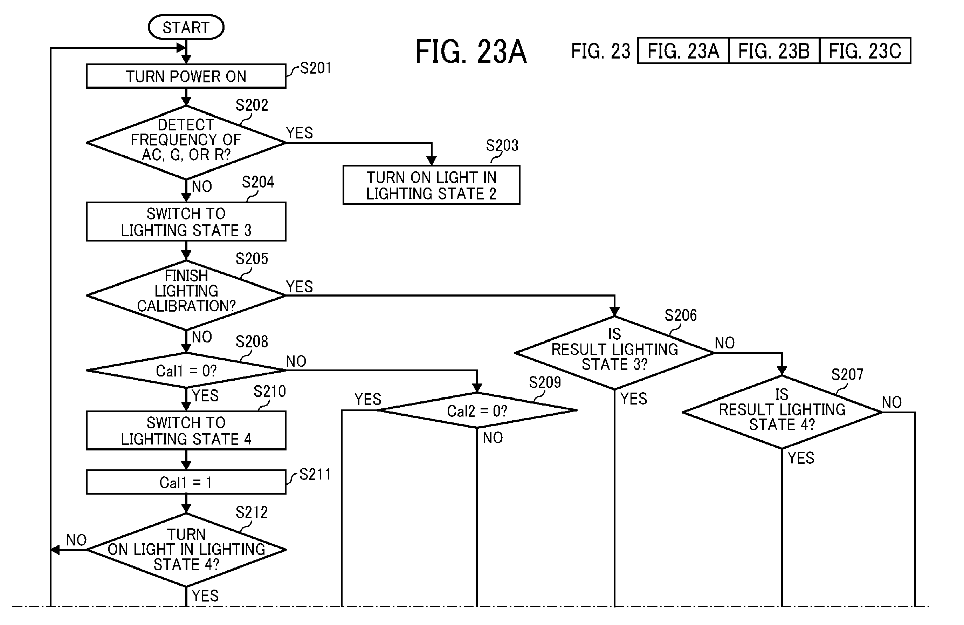

FIGS. 23A, 23B, and 23C are flowcharts illustrating an operation of selecting a lighting circuit that turns on the LED load 161 and keep the lowest power consumption in the illuminating lamp 100 in this embodiment. The operation of selecting a lighting circuit is performed by the controller 150 in the illuminating circuit 101.

The illuminating lamp 100 in this embodiment includes the first lighting circuit 110 in FIG. 9, the second lighting circuit 120 in FIG. 18, the third lighting circuit 130 in FIG. 21, and the semiconductor light emitting element switching circuit 190 in FIG. 22.

Therefore, four lighting states, i.e., a case that the first lighting circuit 110 turns on the light (hereinafter referred to as a lighting state 1), a case that the second lighting circuit 120 turns on the light (hereinafter referred to as a lighting state 2), a case that the third lighting circuit 130 turns on the light by turning off the semiconductor light emitting element switching circuit 190 (hereinafter referred to as a lighting state 3), and a case that the third lighting circuit turns on the light by turning on the semiconductor light emitting element switching circuit 190 (hereinafter referred to as a lighting state 4), are selectable as the lighting states of the LED load 161.

In addition, the controller 150 includes a memory that can store a value of current that flows through the semiconductor light emitting element 160 detected by the current value detector 170 in each of the lighting states 1 to 4.

An example of a control operation is described below. First, after turning on power in S201, the controller 150 measures input voltage frequency input into the illuminating circuit 101 based on the input from the frequency detector 180 in S202.

As described above, if any one of the commercial power E (AC), the glow ballast (G), and the rapid ballast (R) is connected to the illuminating circuit 101 (YES in S202), the commercial frequency is detected as the input voltage frequency input into the illuminating circuit 101. In case of detecting the commercial frequency, the lighting state is regarded as the lighting state 2 in S203.

By contrast, in other cases (NO in S202), e.g., if the inverter ballast is connected to the illuminating circuit 101 for example, the input frequency input into the illuminating circuit 101 is generally equal to or more than 1000 times of the commercial frequency. Therefore, if the frequency of the inverter ballast is detected, first, in order to turn on the light, the lamp is turned on in the lighting state 3 in S204.

Here, if the lighting calibration for the connected fluorescent lamp ballast 203 has already been finished (YES in S205), i.e., the result of the lighting calibration has already been stored in the memory of the controller 150, the lamp is turned on in either one of the lighting state 3, the lighting state 4, or the lighting state 1 based on the result of the lighting calibration in S206, 207, and S227 to S229.

By contrast, if the lighting calibration for the connected fluorescent lamp ballast 203 has not been finished yet (NO in S205), i.e., the result of the lighting calibration has not been stored in the memory of the controller 150 yet, the operation of lighting calibration described below (S208 to S226) is performed.

Here, Call is a parameter that indicates whether or not the current value that flows through the semiconductor light emitting element 160 is detected by the current value detector 170 in the lighting state 4. That is, if Call equals to 0, the current value has not been detected yet. If Call equals to 1, the current value has already been detected.

In addition, Cal2 is a parameter that indicates whether or not the phase calibration (as shown in FIG. 12) is performed. That is, if Cal2 equals to 0, the phase calibration has not been performed yet. If Cal2 equals to 1, the phase calibration has already been performed.

In the lighting calibration, first, if Call equals to 0 (YES in S208), the lighting state is switched from the lighting state 3 to the lighting state 4 in S210. In the lighting state 4 described above, the current value that flows through the LED load 161 is recorded, and Cal1 is set to 1 in S211. By contrast, if Call is not equal to 0 (NO in S208), the operation proceeds to step S209 (described later).

After S211, in case of turning on the light in the lighting state 4 (YES in S212), the lighting state is changed from the lighting state 4 to the lighting state 3 in S213, the LED load 161 is set to the series connection. Subsequently, the lighting state is changed from the lighting state 3 to the lighting state 1 in S214.

In the lighting state 1 described above, the phase calibration is performed. In S214, an initial phase is set in S101 in FIG. 12. Subsequently, in case of turning on the light in the lighting state 1 in S214 (YES in S215), Cal2 is set to 1 in S216, and the phase calibration is performed in the lighting state 1 in S217 and S102 to S105 in FIG. 12. In case of not turning on the light (NO in S215), the operation proceeds to S201. In addition, in case of turning off the light during the phase calibration (NO in S218), the operation proceeds to S201.

In case of turning on the light in the lighting state 1 (YES in S218) and if the current that flows through the LED load 161 in the phase calibration in the lighting state 1 reaches the target value (YES in S219 and FIG. 13A), the result of the lighting calibration is determined as the lighting state 1 in S226, and the lamp is turned on in the lighting state 1 in S227.

By contrast, if the current that flows through the LED load 161 does not reach the target value (NO in S219), it is determined whether or not the energy is saved in S220.

If the energy is saved (YES in S220 and FIG. 13B) and the lamp is turned on in the lighting state 4 (YES in S223), the result of the lighting calibration is determined which current that flows through the LED load 161 is lower, the lighting state 1 or the lighting state 4 in S224 to S226, and the lamp is turned on using the determined lighting state in S227 and S229.

If the energy is not saved (NO in S220 and FIG. 13C), it is determined whether or not the lamp can be turned on in the lighting state 4 in S221. If the light can be turned on (YES in S221), the light is turned on in the lighting state 4 in S225 and S229. If the light cannot be turned on (NO in S221), the light is turned on in the lighting state 3 in S222 and S228.

After switching to the lighting state 4 in S210, if the protection circuit of the fluorescent lamp ballast 203 works and the LED load 161 is turned off (i.e., the current becomes smaller than a predetermined threshold value) (NO in S212), the lighting state does not transitioned to the lighting state 4 in turning power on next time (NO in S208), the lighting state transitions to the lighting state 1 (YES in S209), and the phase calibration is performed in S214 and S217.

If the current that flows through the LED load 161 reaches the target value in the phase calibration in the lighting state 1 (YES in S219), a phase delay amount at that time is determined as the phase calibration result, and it is determined that the lighting calibration result is the lighting state 1 in S226 and S227.

By contrast, if the current that flows through the LED load 161 does not reach the target value (NO in S219), a phase delay amount that the current that flows through the LED load 161 becomes the lowest is determined as the phase calibration result, and it is determined that the lighting calibration result is the lighting state 1 in S226 and S227.

In addition, in case of turning on the light in the lighting state 4 and turning off the light in the lighting state 1, the lighting state is not transitioned to the lighting state 1 next time the power is turned on, and it is determined that the lighting calibration is the lighting state 4. In case of turning on the light in both the lighting state 1 and the lighting state 4, the lighting state that the current that flows through the LED load 161 is lower is determined as the lighting calibration result in S224 to S227 and S229.

As described above, in the lighting calibration in FIGS. 23A, 23B, and 23C, based on current values for each lighting circuit stored in the memory of the controller 150 and current values when the semiconductor light emitting element 190 switches, the lighting circuit that is the closest to the target current value is selected, and it is possible to select the lighting circuit that saves energy to the maximum extent possible.

In case of turning off the light in the lighting calibration, it is prevented to use the lighting circuit that the light is turned off in the next lighting session, and it is possible to use the lighting circuit stored in the memory to turn on the light in the following lighting session after finishing the lighting calibration, simplifying the operation.

As described above, in the illuminating lamp 100 in this embodiment, it is possible that the controller 150 selects the most appropriate lighting circuit for the fluorescent lamp ballast 203, and it is possible to satisfy both saving energy and turning on the light normally.

That is, in case of using various kinds of the fluorescent lamp ballast 203 and connecting to the commercial power E directly, in accordance with the fluorescent lamp ballast 203 or the commercial power E connected to the illuminating lamp 100 in the lighting calibration, it is possible to select the lighting circuit that ensures the lighting operation and saves energy among the multiple lighting circuits maximally or operates at the desired electric power amount and use the selected lighting circuit to drive the LED load 161.

In the embodiment described above, the illuminating lamp 100 includes three lighting circuits, i.e., the first lighting circuit 110, the second lighting circuit 120, and the third lighting circuit 130. However, it is possible to include at least equal to or more than two lighting circuits in the selectable manner. Otherwise, it is possible to include at least any one of the first lighting circuit 110, the second lighting circuit 120, and the third lighting circuit 130 and other lighting circuits in the selectable manner.

In the embodiments described above, an illuminating lamp is provided, which can save energy and control lighting appropriately in accordance with the ballast.

Numerous additional modifications and variations are possible in light of the above teachings. It is therefore to be understood that within the scope of the appended claims, the disclosure of the present invention may be practiced otherwise than as specifically described herein. For example, elements and/or features of different illustrative embodiments may be combined with each other and/or substituted for each other within the scope of this disclosure and appended claims.

## Claims

1. An illuminating lamp (100) connectable to commercial electric power (E) or a fluorescent lamp ballast (203), comprising:
a semiconductor light emitting element (160);
multiple lighting circuits (110, 120, 130) each capable of turning on the semiconductor light emitting element (160);
a switching circuit (140) to switch connection between at least one of the multiple lighting circuits (110, 120, 130) and the semiconductor light emitting element (160); and
a controller (150) to switch the switching circuit (140) in accordance with a predetermined condition, select one lighting circuit (110, 120, 130) among the multiple lighting circuits (110, 120, 130), and turn on the semiconductor light emitting element (160) using the selected lighting circuit (110, 120, 130).

2. The illuminating lamp (100) according to claim 1, further comprising a frequency detecting circuit (180) to detect a frequency of the commercial electric power (E) or the fluorescent lamp ballast (203) and input the detected frequency to the controller (150), wherein the controller (150) selects the lighting circuit (110, 120, 130) based on the input from the frequency detecting circuit (180).

3. The illuminating lamp (100) according to any one of claims 1 and 2, further comprising a current value detecting circuit (170) to detect a value of a current that flows through the semiconductor light emitting element (160) and input the detected value of the current to the controller (150), wherein the controller (150) selects the lighting circuit (110, 120, 130) based on the input from the current value detecting circuit (170).

4. The illuminating lamp (100) according to any one of claims 1 to 3, wherein, in case of detecting a lighting failure state that the current flowing through the semiconductor light emitting element (160) becomes lower than a threshold value during switching of the lighting circuit (110, 120, 130), the controller (150) prevents one of the lighting circuits (110, 120, 130) causing the lighting failure state from being selected in succeeding lighting sessions and starts turning on the light using the selected lighting circuit (110, 120, 130) in the succeeding lighting sessions.

5. The illuminating lamp (100) according to any one of claims 1 to 4, further comprising a semiconductor light emitting element switching circuit (190) to switch a number of semiconductor light emitting elements (161a, 161b) connected in series and a number of semiconductor light emitting elements (161a, 161b) connected in parallel while keeping a total number of semiconductor light emitting elements (161a, 161b) in the semiconductor light emitting elements (160).

6. The illuminating lamp (100) according to any one of claims 1 to 5, wherein one of the multiple lighting circuits (110, 120, 130) is a first lighting circuit (110) that includes:
a bridge diode (102, 103) to perform full-wave rectification on an AC signal;
an inductance element (112) connected to the bridge diode at one side;
a switching element (111) to connect another side of the inductance element (112) with a reference point of the bridge diode (102, 103) and to turn on or off under control of the controller (150);
a diode element (113) to rectify a signal switched by the switching element (111); and
a capacitor (104) to smooth the signal rectified by the diode element (113).

7. The illuminating lamp (100) according to any one of claims 1 to 5, wherein one of the multiple lighting circuits (110, 120, 130) is a second lighting circuit (120) that includes:
a bridge diode (102, 103) to perform full-wave rectification on an AC signal;
a switching element (111) connected to the bridge diode and to turn on or off under control of the controller (150);
a diode element (113) connected between the switching element and a reference point voltage of the bridge diode (102, 103);
an inductance element (112) connected to the switching element (111) and the diode element (113); and
a capacitor (104) connected between one side of the inductance element (112) and a reference point of the bridge diode (102, 103).

8. The illuminating lamp (100) according to any one of claims 1 to 5, wherein one of the multiple lighting circuits (110,120, 130) is a third lighting circuit (130) that includes:
a bridge diode (102, 103) to perform full-wave rectification on an AC signal;
a first switching element (132) connected between the bridge diode (102, 103) and an output terminal;
a voltage dividing resistor (133) to determine a voltage between a gate and a source of the first switching element (132); and
a second switching element (131) to connect a voltage dividing resistor (134) with a reference voltage of the bridge diode (102, 103) and turn on or off under control of the controller (150).

9. A lighting apparatus (300), comprising:
the illuminating lamp (100) according to any one of claims 1 to 8; and
a light fitting (200) to mount the illuminating lamp (100).

10. A lighting control circuit (101) usable for an illuminating lamp (100) connectable to commercial electric power (E) or a fluorescent lamp ballast (203), comprising:
a semiconductor light emitting element (160);
multiple lighting circuits (110, 120, 130) each capable of turning on the semiconductor light emitting element (160);
a switching circuit (140) to switch connection between at least one of the multiple lighting circuits (110, 120, 130) and the semiconductor light emitting element (160); and
a controller (150) to switch the switching circuit (140) in accordance with a predetermined condition, select one lighting circuit (110, 120, 130) among the multiple lighting circuits (110, 120, 130), and turn on the semiconductor light emitting element (160) using the selected lighting circuit (110, 120, 130).
